# EUROPEAN PATENT SPECIFICATION

(11) **EP 2 444 310 B1**
(45) Date of publication and mention of the grant of the patent: **30.07.2014**
(21) Application number: 10188290.0
(22) Date of filing: 20.10.2010
(51) Int. Cl.: B62L 1/12

(54) **Bicycle brake system using cam mechanism**
Fahrradbremssystem mit Nockenmechanismus
Système de frein de bicyclette utilisant un mécanisme de came

(43) Date of publication of application: 25.04.2012
(73) Proprietor: The Hive Global Inc., West District Taichung City 40351 Taipei (CN)
(72) Inventor: Wallace Thrash, Gregory, Petaluma, CA 94952 (US)
(74) Representative: Chaillot, Geneviève

(56) References cited:
- CN-Y- 201 120 943
- DE-A1- 3 805 237
- DE-U1- 20 319 913
- US-A- 3 628 635
- US-B2- 7 000 739

## Description

The present invention relates to a bicycle brake system, and more particularly, to a C-type brake system which uses a cam mechanism to control the change of distance between the two arms so as to brake the wheel rim.

### BACKGROUND OF THE INVENTION

The brake system is to reduce the speed of the wheels of the bicycles gradually until the bicycles are fully stopped. The brake system is a safety system to ensure that the riders control the bicycles safely. The brake system generally includes two brake pads located on two sides of the wheel rim or at the hub where the brake disk is connected.

For those brake systems with two brake pads on two sides of the rim, there are different types such as cantilever type, C type, V type and hydraulic type brake systems. The cantilever type includes two arms and the two brake cables are connected to the two arms, when braking, the two brake cables pull the arms simultaneously to pivot the arms toward the rim. The C type brake system has a fixed arm and a pivotal arm which is connected to the brake cable. When braking, the brake cable pulls the pivotal arms to stop the rim. The V type brake system is similar to the cantilever type and the difference is that the V type does not have a cable frame. The V type uses a solid and curved tube fixed to the pivot and drives the two arms which are pivoted toward the rim when braking.

The C type brake system is mainly used for the bicycles with narrow tires such as the road bicycles and includes cam type and lever type. The cam type means that the arms are driven by a cam mechanism when braking, and the lever type means that the arms are driven by a link mechanism.

U.S. Pat. No. 7,000,739 discloses a cam assisted wheel brake for a bicycle and comprises two arms mounted on a bolt, which provides a pivot point for the arms and a means for attachment of the brake to the fork of the bicycle. The brake incorporates a cam lever pivotably associated with the first arm and which engages a finger portion of the second arm and which comprising a first portion having a screw passing through a bore, a middle portion having a top edge having a curved edge portion, and a second portion pivotably connected to the first arm by a pin extending therethrough. The invention preferably has a quick release mechanism comprising a lever having a first pin extending therefrom, the pin pivotably engaging a bore in the first arm, and a second pin extending off axis from the first pin and pivotably engaging the second portion of the cam lever.

U.S. Pat. No. 3,628,635 discloses a side-pull bicycle brake mechanism and has major and minor arch members wherein it is required to pull upwards on one end of said major arch member by means of a wire in the case a pair of brake shoes are one-sided from the center, and so constructed that a small tensile force can achieve a big brake effect with easy handling by providing simple force magnifying means between the pulling member of said major arch member and said wire, so that said pair of brake shoes can be always actuated and applied equally to the two sides of bicycle rim.

U.S. Pat. No. 7,422,090 discloses a Caliper brake assembly for engaging a rimmed wheel on a frame of a bicycle. First and second brake arms are provided having brake pads supported on first ends thereof and bores extending therethrough for receiving a bolt for providing a pivot point for the pivotal attachment of the first and second brake arms to the bicycle frame. A spring is associated with the first and second arms to bias their brake pads away from the rimmed wheel. A rocker assembly is included in the caliper brake assembly which includes a rocker arm pivotally appended to a second end of the first brake arm, the rocker assembly having a region for fixedly receiving a control cable and a region for pivotally receiving a link, the link provided for pivotally connecting the rocker arm proximate to a second end of the second brake arm.

The first two references use a cam to contact the fixed arm so as to pivot the movable arm so that the brake pads are in contact with rim to stop the wheel. The third reference includes a link unit between the first and second arms, and the link unit is composed of a swing arm and a swing link. The link unit is connected to the first and second arms to control the operation of the second arm.

Document CN 201 120 943 Y discloses a bicycle brake system according to the preamble of claim 1.

Document DE 203 19 913 U1 discloses lightweight rim brakes for a bicycle comprise arms linked by a common pivot bolt and with one arm located inside the forked ends of the other arm. The arms are made of fibre reinforced plastic and are held apart by a spring. The arms are fitted with brake blocks at one end and with fittings for the inner and outer of a Bowden cable at the other end.

Document DE 38 05 237 A1 discloses a brake for bicycles that has two shoes which are connected to each other in an articulated manner and are provided at one end with brake blocks and run at the other end into two lever arms for the connection of an actuating cable. The lever arm of one brake shoe passes through an opening formed in the body of the other brake shoe.

The present invention relates to a C-type brake system using a cam mechanism. It is noted that the cam mechanism of the prior references is directly in contact with the fixed arm and when the cam rotates the surface with different curvatures of the cam pivots the movable arm to move the brake pads toward the wheel rim.

However, the direct contact between the cam and the fixed arm will wear the fixed arm which has to be replaced after a period of use. The replacement of the fixed arm almost the work to replace the whole C type brake system. Besides, the contact surface of the cam and the fixed arm requires higher standard of machining and the fixed arm has specific outer contour surface which is different to receive high precise machining steps, this means a higher cost is involved. In addition, the resilient member between the overlapped arms is usually inclined because of the overlapped arms and this affects the resilient member to bounce back. The brake cables located above the cam are respectively and alternatively connected to the arms and not located on the same axis so that the bent brake cables do not provide a good braking action.

### SUMMARY OF THE INVENTION

The present invention relates to a bicycle brake system and comprises a first arm unit having a pivot portion which is located between a first arm and a first pivotal end. An engaging slot is defined in the first pivotal end and a second arm unit is located in the engaging slot. The second arm unit has a pivot portion pivotably connected with the pivot portion of the first arm unit. The second arm unit includes a second arm and a connection portion. A first brake pad and a second brake pad are respectively connected to the first arm and the second arms. The two brake pads are located on two sides of the wheel rim. A cam unit has a contact piece connected to the second arm unit. A cam member has a pivotal portion pivotably connected to the pivotal end and is located in the engaging slot. The cam member includes a guide portion and a cam portion on two ends thereof. The cam portion has a curved surface which is in contact with the contact piece. An operation unit is connected to the connection portion and has a cable which extends through an end of the connection portion and is fixed to the guide portion. The end of the connection portion and the guide portion are located on a common axis. The cam member and the second arm unit are pivoted by pulling the cable, and the contact piece is pushed by the cam member to change a distance between the first and second brake pads.

The primary object of the present invention is to provide a bicycle brake system wherein the cam member is in contact with the contact piece rather than the second arm unit so that only the contact piece needs to be replaced and the second arm unit does not wear out.

The second object of the present invention is to provide a bicycle brake system wherein the contact piece is easily machined without need of special tools or clamping devices so that the cost for machining is reduced.

The third object of the present invention is to provide a bicycle brake system wherein the first and second arms are symmetrically and pivotably connected to each other so that the resilient member does not tilt. The cam member and the positioning member for securing the cable are located on a common axis such that the two arms bounce back precisely and the cable transfers the brake force efficiently.

The present invention will become more obvious from the following description when taken in connection with the accompanying drawings which show, for purposes of illustration only, a preferred embodiment in accordance with the present invention.

### BRIEF DESCRIPTION OF THE DRAWINGS

Fig. 1 is a perspective view to show the brake system of the present invention;
Fig. 2 is a perspective view to show that the brake system of the present invention is installed to a bicycle wheel;
Fig. 3 is an exploded view to show the brake system of the present invention;
Fig. 4 is another exploded view to show the brake system of the present invention;
Fig. 5 is a top view of the brake system of the present invention;
Fig. 6 is a partial cross sectional view of the brake system of the present invention, and
Fig. 7 shows the operation of the brake system of the present invention.

### DETAILED DESCRIPTION OF THE PREFERRED EMBODIMENT

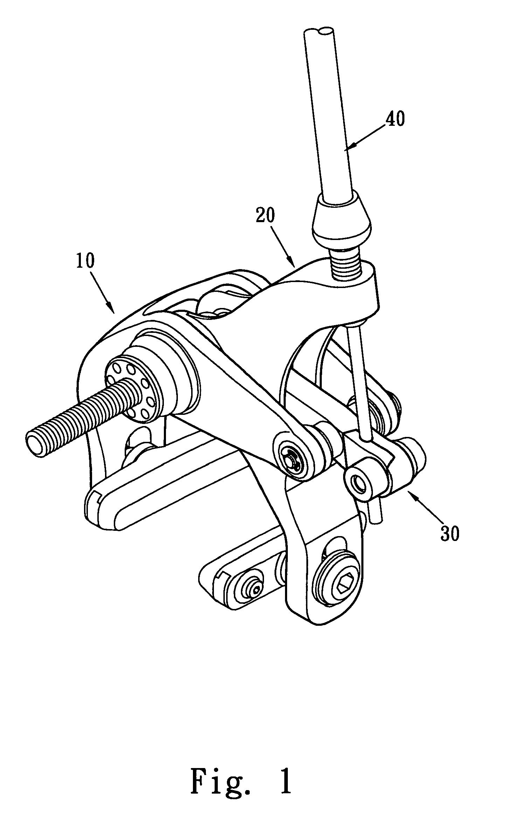

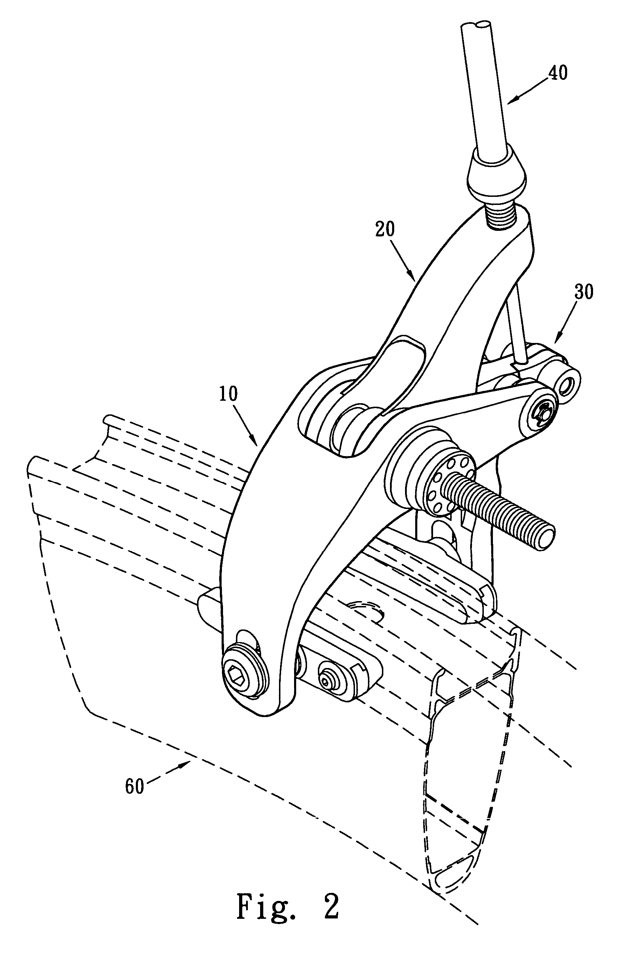

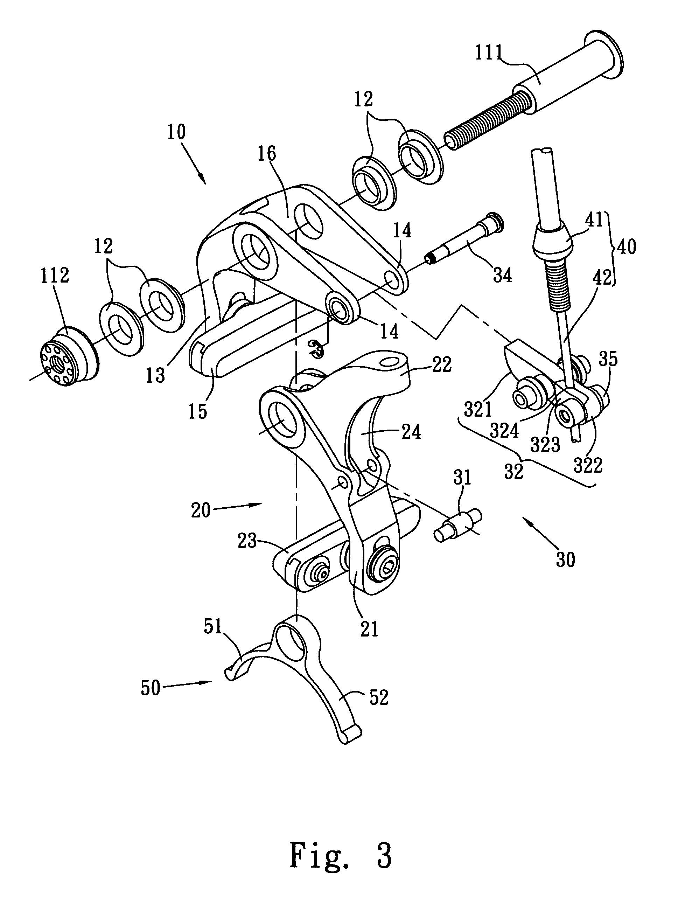

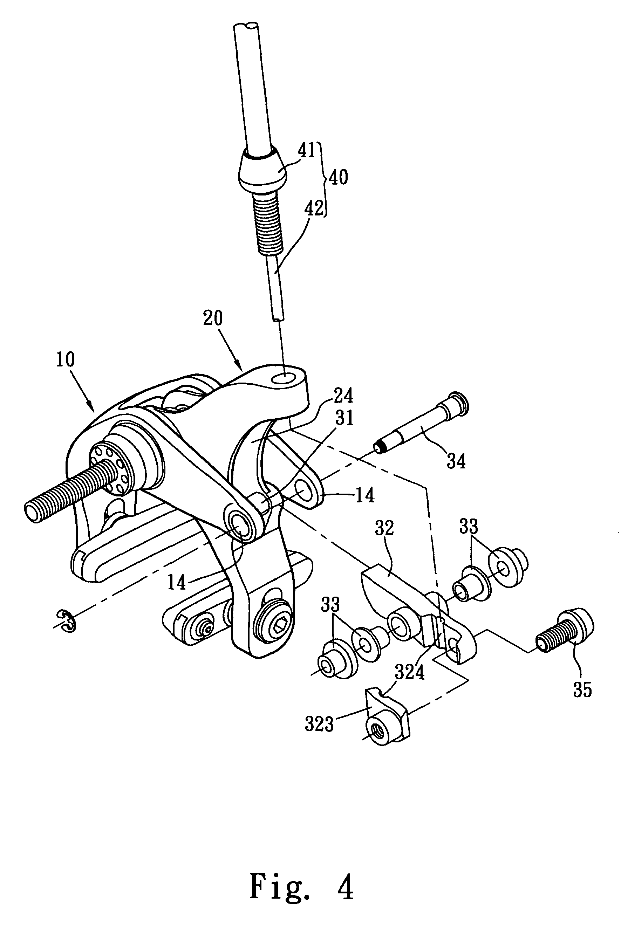

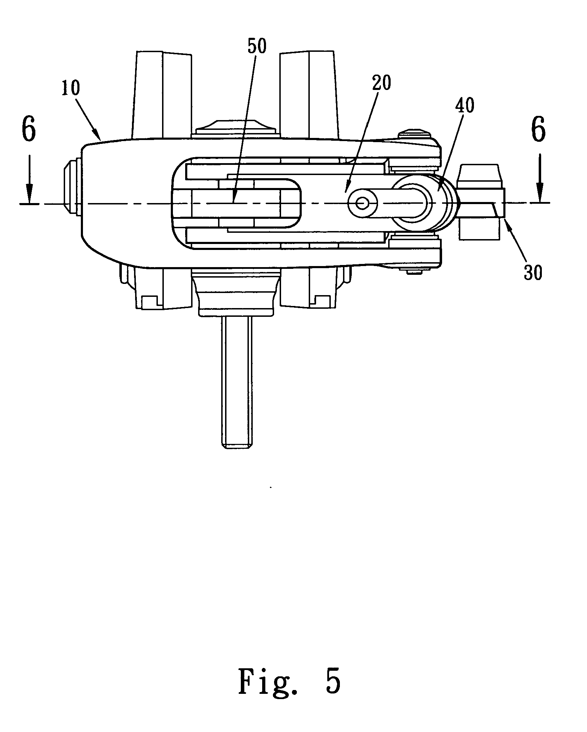

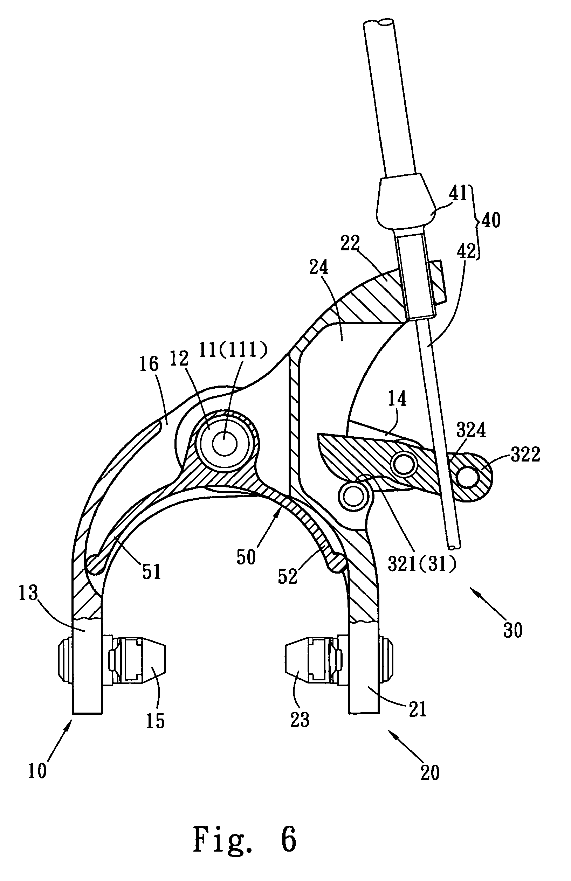

Referring to Figs. 1 to 6, the bicycle brake system of the present invention is located across a wheel rim 60 and comprises a first arm unit 10, a second arm unit 20, two operation units 40 cooperated with the first and second arm units 10, 20, and a cam unit 30.

The first arm unit 10 comprises a pivot portion 11 which is located between a first arm 13 and a first pivotal end 14. Four bushes 12 are engaged with the pivot portion 11 and are made of plastic steel. An engaging slot 16 is defined between two extensions of the first pivotal end 14. A first brake pad 15 is connected to the first arm 13 and faces the wheel rim 60.

The second arm unit 20 is located in the engaging slot 16 and has a pivot portion pivotably connected with the pivot portion 11. A pin 111 extends through the bushes 12 and the first and second arm units 10, 20. A nut 112 is fixed to the distal end of the pin 111. A pivot portion of the second arm unit 20 is located between a second arm 21 and a connection portion 22. A second brake pad 23 is connected to the second arm 21 and faces the wheel rim 60. The first and second arms 13, 21 are symmetrically located on two sides of the wheel rim 60. A reception recess 24 is defined in an outer surface of a mediate portion of the second arm unit 20.

The cam unit 30 has a contact piece 31 located in the reception recess 24 of the second arm unit 20. A cam member 32 has a pivotal portion pivotably connected to the pivotal end 14 by extending through bushes 33 engaged with the pivotal portion of the cam member and the pivotal end 14 of the first arm unit 10 so that the cam member 32 is pivotably located in the engaging slot 16. Again, the bushes 33 are made of plastic steel. The cam member 32 includes a guide portion 322 and a cam portion 321 on two ends thereof. The cam portion 321 has a curved surface which is in contact with the contact piece 31. The guide portion 322 includes an engaging member 323 connected to the cam member 32, a hole 324 is defined between the engaging member 323 and the cam member 32.

The operation unit 40 has a positioning member 41 which is secured to the connection portion 22 and a cable 42 extends through the positioning member 41 located at an end of the connection portion 22 and is fixed to the guide portion 322 by an urging bolt 35. The positioning member 41 at the end of the connection portion 22 and the guide portion 322 are located on a common axis so that the cable 42 is maintained to be straight within bent portion.

A resilient member 50 has two resilient extensions 51, 52 which are in contact with the insides of the first and second arms 13, 21 respectively so as to keep a distance between the first and second arms 13, 21 and to provide a bounce force to the first and second arms 13, 21.

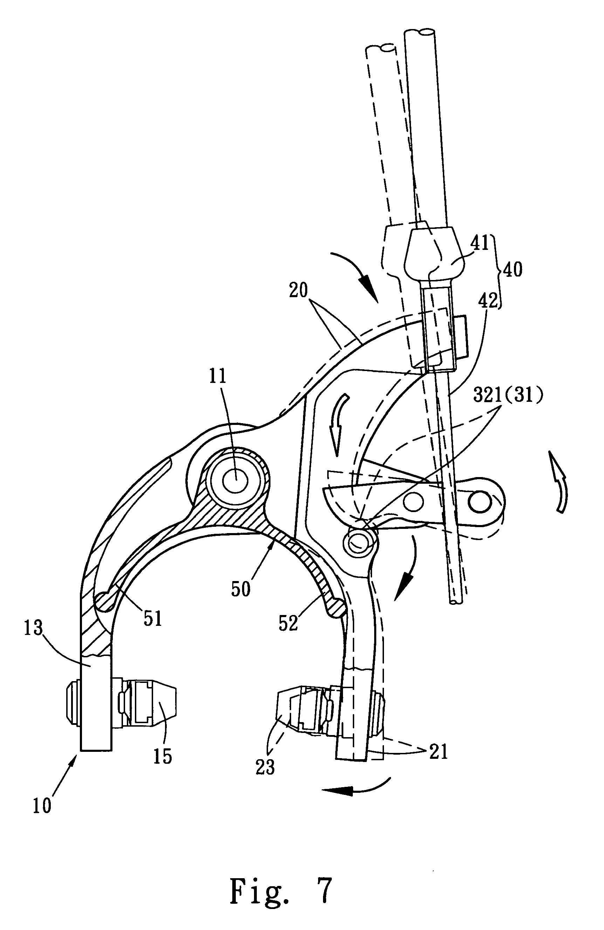

Referring to Fig. 7, the dotted lines show that the brake system has not been operated, when the rider activates the brake system, the cable 42 is pulled upward and the cam member 32 is rotated in counter clockwise as shown by the hollow arrowhead. The cam portion 321 contacts the contact piece 31 which is moved clockwise by the curved surface of the cam portion 321, and the second arm 21 is pivoted clockwise as shown in solid arrowhead. Therefore, the second brake pad 23 moves and contacts the wheel rim 60 to stop the wheel.

When releasing the force applied to the cable 42, the resilient member 50 bounces the second arm 21 and the second brake pad 23 counter clockwise, and the contact piece 31 pushes the cam portion 321 clockwise. The cam member 32 is pivoted clockwise so that the engaging member 322 and the cable 42 move back to their original positions.

The contact piece 31 is connected to the second arm 21 and the cam member 32 on the first arm 13, so that the cam member 32 is not directly in contact with the second arm 31. When the contact piece 31 and/or the cam member 32 need to be replaced, the first and second arm units 10, 20 need not to be dispatched from the bicycle and only the contact piece 31 and/or the cam member 32 are replaced.

The contact piece 31 is easily machined and can be machined to desired requirement at low cost.

The first and second arm units 10, 20 are symmetrically and pivotably connected to each other by engaging the second arm unit 20 with the engaging slot 16 in the first arm unit 10. This arrangement has two advantages, one of which is that the two resilient extensions 51, 52 of the resilient member 50 are in contact with the first and second arms 13, 21 such that the resilient member 50 does not tilt and has better bouncing function. The other advantage is t hat the cam member 32 is connected to the first arm unit 10 and the operation unit 40 is connected to the second arm unit 20, so that the positioning member 41 and the hole 324 are located on a common axis and this makes the cable 42 to be straight without bent portion. This makes the cable 42 to be operated smoothly.

While we have shown and described the embodiment in accordance with the present invention, it should be clear to those skilled in the art that further embodiments may be made without departing from the scope of the present invention.

## Claims

1. A bicycle brake system located across a wheel rim (60) and comprising:
a first arm unit (10) having a pivot portion (11) which is located between a first arm (13) and a first pivotal end (14), an engaging slot (16) defined in the first pivotal end (14), a first brake pad (15) connected to the first arm (13) and adapted to face the wheel rim (60);
a second arm unit (20) part of which being located in the engaging slot (16) and having a pivot portion pivotably connected with the pivot portion (11) of the first arm unit (10), such that the pivot axis of the pivot portion (11) of the first arm unit (10) coincides with the pivot axis of the pivot portion of the second arm unit (20), the pivot portion being located between a second arm (21) and a connection portion (22) of the second arm unit (20), a second brake pad (23) connected to the second arm (21) and adapted to face the wheel rim (60), the first (13) and second (21) arms adapted to be symmetrical to two sides of the wheel rim (60);
a cam unit (30) having a contact piece (31), and a cam member (32) having a pivotal portion pivotably connected to the pivotal end (14) and located in the engaging slot (16), the cam member (32) including a guide portion (322) and a cam portion (321) on two ends thereof, the cam portion (321) having a curved surface, the guide portion (322) including an engaging member (323) connected to the cam member (32), a hole (324) being defined between the engaging member (323) and the cam member (32);
an operation unit (40) connected to the connection portion (22) and having a positioning member (41) fixed to the connection portion (22), and a cable (42) which extends through an end of the connection portion (22) and is fixed in the hole (324) of the guide portion (322), the positioning member (41) and the hole (324) being located on a common axis, so that the cable (42) does not bend,
**characterized in that**
the contact piece (31) of the cam unit (30) is connected to the second arm unit (20) and the curved surface of the cam portion (321) is in contact with the contact piece (31),
the cam member (32) and the second arm unit (20) are pivoted by pulling the cable (42), and
the contact piece (31) is pushed by the cam member (32) to change a distance between the first (15) and second (23) brake pads.

2. The system as claimed in claim 1, wherein the cable (42) movably extends through the positioning member (41).

3. The system as claimed in claim 1, wherein a reception recess (24) is defined in an outer surface of a mediate portion of the second arm unit (20) and the contact piece (31) is located in the reception recess (24).

4. The system as claimed in claim 1, wherein a resilient member (50) has two resilient extensions (51, 52) which are in contact with the first (13) and second (21) arms respectively so as to keep a distance between the first (13) and second (21) arms.

5. The system as claimed in claim 1, wherein the pivotal portion (11) has at least one bush (12) and a pin (111) extends through the at least one bush (12) and the first (10) and second (20) arm units, a nut (112) is securely connected to the pin (111).

6. The system as claimed in claim 1, wherein the contact piece (31) is rotatable about an axis thereof.

7. The system as claimed in claim 1, wherein the pivotal portion of the cam member (32) has at least one bush (33).

8. The system as claimed in claim 5, wherein the at least one bush (12) is made of plastic steel.

9. The system as claimed in claim 7, wherein the at least one bush (33) is made of plastic steel.

## Patentansprüche

1. Fahrradbremssystem, das quer über einer Radfelge (60) angeordnet ist und Folgendes umfasst:
eine erste Armeinheit (10), die einen Schwenkabschnitt (11), der sich zwischen einem ersten Arm (13) und einem ersten als Drehpunkt dienenden Ende (14) befindet, einen Eingriffschlitz (16), der in dem ersten als Drehpunkt dienenden Ende (14) definiert ist, eine erste Bremsbacke (15) aufweist, die mit dem ersten Arm (13) verbunden ist und so ausgelegt ist, dass sie der Radfelge (60) zugewandt ist;
eine zweite Armeinheit (20), von der ein Teil in dem Eingriffschlitz (16) angeordnet ist und die einen Schwenkabschnitt, der schwenkbar mit dem Schwenkabschnitt (11) der ersten Armeinheit (10) verbunden ist, sodass sich die Schwenkachse des Schwenkabschnitts (11) der ersten Armeinheit (10) mit der Schwenkachse des Schwenkabschnitts der zweiten Armeinheit (20) deckt, wobei sich der Schwenkabschnitt zwischen einem zweiten Arm (21) und einem Verbindungsabschnitt (22) der zweiten Armeinheit (20) befindet, eine zweite Bremsbacke (23) aufweist, die mit dem zweiten Arm (21) verbunden und so ausgelegt ist, dass sie der Radfelge (60) zugewandt ist, wobei der erste (13) und der zweite (21) Arm so ausgelegt sind, dass sie symmetrisch auf zwei Seiten der Radfelge (60) sind;
eine Nockeneinheit (30) mit einem Kontaktstück (31) und einem Nockenelement (32), das einen als Drehpunkt dienenden Abschnitt aufweist, der schwenkbar mit dem als Drehpunkt dienenden Ende (14) verbunden ist, und in dem Eingriffschlitz (16) angeordnet ist, wobei das Nockenelement (32) einen Führungsabschnitt (322) und einen Nockenabschnitt (321) an zwei Seiten davon aufweist, wobei der Nockenabschnitt (321) eine gekrümmte Fläche aufweist, der Führungsabschnitt (322) ein Eingriffelement (323) aufweist, das mit dem Nockenelement (32) verbunden ist, ein Loch (324) zwischen dem Eingriffelement (323) und dem Nockenelement (32) definiert ist;
eine Betätigungseinheit (40), die mit dem Verbindungsabschnitt (22) verbunden ist und ein Positionierelement (41), das an dem Verbindungsabschnitt (22) befestigt ist, und ein Drahtseil (42) aufweist, das durch ein Ende des Verbindungsabschnitts (22) verläuft und in dem Loch (324) des Führungsabschnitts (322) befestigt ist, wobei sich das Positionierelement (41) und das Loch (324) auf einer gemeinsamen Achse befinden, sodass sich das Drahtseil (42) nicht biegt,
**dadurch gekennzeichnet, dass**
das Kontaktstück (31) der Nockeneinheit (30) mit der zweiten Armeinheit (20) verbunden ist und die gekrümmte Fläche des Nockenabschnitts (321) das Kontaktstück (31) berührt,
das Nockenelement (32) und die zweite Armeinheit (20) durch Ziehen an dem Drahtseil (42) geschwenkt werden, und
von dem Nockenelement (32) auf das Kontaktstück (31) gedrückt wird, um einen Abstand zwischen der ersten (15) und der zweiten (23) Bremsbacke zu verändern.

2. System nach Anspruch 1, wobei das Drahtseil (42) beweglich durch das Positionierelement (41) verläuft.

3. System nach Anspruch 1, wobei eine Aufnahmevertiefung (24) in einer Außenfläche eines Zwischenabschnitts der zweiten Armeinheit (20) definiert ist und das Kontaktstück (31) in der Aufnahmevertiefung (24) angeordnet ist.

4. System nach Anspruch 1, wobei ein elastisches Element (50) zwei elastische Erweiterungen (51, 52) aufweist, die den ersten (13) beziehungsweise zweiten (21) Arm berühren, um einen Abstand zwischen dem ersten (13) und zweiten (21) Arm beizubehalten.

5. System nach Anspruch 1, wobei der Schwenkabschnitt (11) mindestens eine Buchse (12) aufweist und ein Bolzen (111) durch die mindestens eine Buchse (12) und die erste (10) und zweite (20) Armeinheit verläuft, wobei eine Mutter (112) sicher mit dem Bolzen (111) verbunden ist.

6. System nach Anspruch 1, wobei das Kontaktstück (31) um eine Achse davon drehbar ist.

7. System nach Anspruch 1, wobei der als Drehpunkt dienende Abschnitt des Nockenelements (32) mindestens eine Buchse (33) aufweist.

8. System nach Anspruch 5, wobei die mindestens eine Buchse (12) aus Kunststoff-Stahl gefertigt ist.

9. System nach Anspruch 7, wobei die mindestens eine Buchse (33) aus Kunststoff-Stahl gefertigt ist.

## Revendications

1. Système de frein de bicyclette disposé en travers d'une jante de roue (60) et comprenant :
une première unité de bras (10) ayant une partie pivot (11) qui est située entre un premier bras (13) et une première extrémité pivotante (14), une fente d'engagement (16) définie dans la première extrémité pivotante (14), un premier patin de frein (15) relié au premier bras (13) et agencé pour faire face à la jante de roue (60) ;
une seconde unité de bras (20), dont une partie est située dans la fente d'engagement (16) et ayant une partie pivot reliée de façon pivotante à la partie pivot (11) de la première unité de bras (10), de telle sorte que l'axe de pivotement de la partie pivot (11) de la première unité de bras (10) coïncide avec l'axe de pivotement de la partie pivot de la seconde unité de bras (20), la partie pivot étant située entre un second bras (21) et une partie de liaison (22) de la seconde unité de bras (20), un second patin de frein (23) étant relié au second bras (21) et agencé pour faire face à la jante de roue (60), les premier (13) et second (21) bras étant agencés pour être symétriques des deux côtés de la jante de roue (60) ;
une unité de came (30) ayant une pièce de contact (31), et un élément de came (32) ayant une partie pivotante reliée de façon pivotante à l'extrémité pivotante (14) et située dans la fente d'engagement (16), l'élément de came (32) comprenant une partie guide (322) et une partie came (321) sur deux extrémités de celui-ci, la partie came (321) ayant une surface incurvée, la partie guide (322) comprenant un élément d'engagement (323) relié à l'élément de came (32), un trou (324) étant défini entre l'élément d'engagement (323) et l'élément de came (32) ;
une unité d'actionnement (40) reliée à la partie de liaison (22) et ayant un élément de positionnement (41) fixé à la partie de liaison (22), et un câble (42) qui s'étend à travers une extrémité de la partie de liaison (22) et est fixé dans le trou (324) de la partie guide (322), l'élément de positionnement (41) et le trou (324) étant situés sur un axe commun, de telle sorte que le câble (42) ne se plie pas,
**caractérisé par le fait que** :
la pièce de contact (31) de l'unité de came (30) est reliée à la seconde unité de bras (30) et la surface incurvée de la partie came (321) est en contact avec la pièce de contact (31),
l'élément de came (32) et la seconde unité de bras (20) sont amenés à pivoter par traction du câble (42), et
la pièce de contact (31) est poussée par l'élément de came (32) pour changer une distance entre les premier (15) et second (23) patins de frein.

2. Système selon la revendication 1, dans lequel le câble (42) s'étend de façon mobile à travers l'élément de positionnement (41).

3. Système selon la revendication 1, dans lequel une cavité de réception (24) est définie dans une surface extérieure d'une partie intermédiaire de la seconde unité de bras (20) et la pièce de contact (31) est située dans la cavité de réception (24).

4. Système selon la revendication 1, dans lequel un élément élastique (50) a deux extensions élastiques (51, 52) qui sont respectivement en contact avec les premier (13) et second (21) bras de façon à maintenir une distance entre les premier (13) et second (21) bras.

5. Système selon la revendication 1, dans lequel la partie pivotante (11) a au moins une bague (12) et une broche (111) s'étend à travers l'au moins une bague (12) et les première (10) et seconde (20) unités de bras, un écrou (112) étant fermement relié à la broche (111).

6. Système selon la revendication 1, dans lequel la pièce de contact (31) est apte à tourner autour d'un axe de celle-ci.

7. Système selon la revendication 1, dans lequel la partie pivotante de l'élément de came (32) a au moins une bague (33).

8. Système selon la revendication 5, dans lequel l'au moins une bague (12) est faite de matière plastique-acier.

9. Système selon la revendication 7, dans lequel l'au moins une bague (33) est faite de matière plastique-acier.
